# FASCICULE DE BREVET EUROPEEN

(11) **EP 2 758 279 B1**
(45) Date de publication et mention de la délivrance du brevet: **29.03.2017**
(21) Numéro de dépôt: 12759716.9
(22) Date de dépôt: 17.09.2012
(51) Int. Cl.: B60R 13/04, B60R 19/20, B60R 19/42, B29C 65/16, B29C 45/16

(54) **PANNEAU DE PROTECTION DESTINE A ETRE FIXE SUR UNE PARTIE DE LA CARROSSERIE D'UN VEHICULE AUTOMOBILE ET PROCEDE DE FABRICATION D'UN TEL PANNEAU**
SCHUTZPANEEL ZUR ANBRINGUNG AN EINEM KAROSSERIETEIL EINES KRAFTFAHRZEUGS SOWIE VERFAHREN ZUR HERSTELLUNG EINES SOLCHEN PANEELS
PROTECTIVE PANEL TO BE ATTACHED ONTO A PORTION OF THE BODY OF A MOTOR VEHICLE, AND METHOD FOR MANUFACTURING SUCH A PANEL

(30) Priorité: 23.09.2011 FR 1158512; 23.09.2011 FR 1158513; 15.05.2012 FR 1254459
(43) Date de publication de la demande: 30.07.2014
(73) Titulaire: Peugeot Citroën Automobiles SA, 78140 Vélizy Villacoublay (FR); Rehau SA, 57340 Morhange (FR)
(72) Inventeur: AZOULAY, Laurent, F-92140 Clamart (FR); CARFANTAN, Maurice, F-92140 Clamart (FR); COLIN, Sebastien, F-57915 Woustviller (FR); DEYDIER, Dimitri, F-92160 Antony (FR); MISSIROLI, Matteo, F-75003 Paris (FR); PENNERATH, Eddy, F-57450 Henriville (FR)
(74) Mandataire: Fosse, Danièle
(86) Numéro de dépôt international: PCT/EP2012/068254
(87) Numéro de publication internationale: WO 2013/041490

(56) Documents cités:
- EP-A1- 0 995 668
- EP-A1- 1 612 024
- EP-A2- 1 362 744
- WO-A1-01/54888
- FR-A1- 2 959 190
- US-A- 4 072 334

## Description

La présente invention revendique les priorités des demandes françaises 1158512 déposée le 23 septembre 2011, 1158513 déposée le 23 septembre 2011 et 1254459 déposée le 15 mai 2012.

La présente invention concerne un procédé de fabrication d'un panneau de protection destiné à être fixé sur une partie de la carrosserie d'un véhicule.

Les portes latérales des véhicules automobiles sont souvent équipées de baguettes de protection qui sont censées protéger ces portes à l'égard de petits chocs urbains, tels que les chocs de portes latérales, et de caddies. Du fait de leur faible largeur, ces baguettes ont une fonction de protection qui est très réduite.

Certains véhicules sont équipés de bandeaux latéraux présentant une grande largeur. Ces bandeaux sont en matière plastique rigide et ne présentent ainsi pas la capacité de se déformer sous l'effet d'un petit choc urbain. De ce fait, l'énergie d'impact en cas de choc d'un chariot de supermarché ou d'un choc poteau est transmise intégralement à la portière. Ce bandeaux présentent tout au plus l'avantage qu'en cas d'éraflures, ils évitent d'avoir à repeindre la totalité d'une porte ou d'une aile du véhicule.

Le brevet US 4 411 938 décrit un panneau de protection en matière plastique souple qui est collé sur la carrosserie d'un véhicule automobile. La protection conférée par un tel panneau souple est réduite étant donné que le panneau est en contact avec la carrosserie et de ce fait n'évite pas la déformation de celle-ci en cas de choc un peu violent.

On a proposé dans FR 2 959 190 de réaliser un panneau de protection en matière plastique destiné à être fixé sur une partie de la carrosserie d'un véhicule automobile, comprenant une paroi en matière plastique rigide et une paroi en matière plastique souple, ces deux parois étant en contact l'une avec l'autre dans des zones qui entourent des zones dans lesquelles ces deux parois sont espacées l'une de l'autre, et définissent entre elles des alvéoles qui sont remplies d'air.

Ainsi, les zones dans lesquelles la paroi en matière plastique souple est espacée de la paroi en matière plastique rigide et remplies d'air sont déformables en cas de choc de type urbain. Lors d'un tel choc, la paroi souple se rapproche de la paroi rigide, sans être endommagée, ni même éraflée. Un tel panneau présente donc une capacité de protection très intéressante. Toutefois, on a pu observer qu'à des conditions de températures élevées, il survient un gonflement excessif du panneau lié à la dilatation du matériau souple et de l'air emprisonné. Après plusieurs cycles climatiques (-20°C/23°C/85°C), il peut être observé une déformation rémanente de l'élément souple occasionnant un défaut irréversible.

La présente invention a pour but de proposer un panneau de protection de ce type présentant des performances de protection encore améliorées et palliant ces inconvénients. Le document US 4 072 334 décrit un panneau de protection selon le préambule de la revendication 1 un procédé de fabrication d'un panneau de protection selon le préambule de la revendication 8.

Le but de la présente invention est de remédier aux inconvénients ci-dessus. Ce but est atteint, selon l'invention, grâce à un panneau de protection en matière plastique ayant les caractéristiques de la revendication 1.

Les zones dans lesquelles la paroi en matière plastique souple présente une forme bombée sont déformables en cas de choc de type urbain. Lors d'un tel choc, la paroi souple peut se déformer dans l'espace vide laissé par l'orifice de la paroi rigide, sans être endommagée, ni même éraflée.

De plus, ces zones peuvent être réparties sur le panneau de protection de façon à former un motif esthétique.

Dans les zones dans lesquelles se trouve seule la paroi en matière plastique souple, celle-ci présente une surface convexe dirigée vers l'extérieur, soit sous forme de bulle de section circulaire soit sous forme d'une bulle allongée ou toute autre forme appropriée. Cette surface convexe permet d'obtenir une protection particulièrement efficace à l'égard des chocs.

Dans une version préférée de l'invention, les zones dans lesquelles les deux parois sont en contact l'une avec l'autre occupent moins de 50% de la surface du panneau. Ainsi, une partie prépondérante de la surface du panneau est déformable en cas de choc, ce qui lui confère une capacité optimale de protection.

La liaison étanche est de préférence réalisée par soudage laser de manière à présenter une résistance mécanique supérieure à la contrainte mécanique provoquée par l'augmentation de la pression dans la cellule lors d'un impact.

Dans une variante, la paroi en matière plastique rigide est constituée par une plaque munie d'orifices disposés en regard des zones dans lesquelles la paroi souple est bombée, les orifices étant fermés par des bouchons. L'évent peut alors être ménagé sur ces bouchons.

Dans une autre variante, l'évent est ménagé au niveau de la liaison étanche par une rupture ponctuelle de cette liaison obtenue par une discontinuité du cordon de soudure entre la paroi rigide et la paroi souple. Cette discontinuité du cordon de soudure peut être obtenue par une interruption ponctuelle du cordon de soudure ou par un perçage au niveau du cordon de soudure réalisé.

Selon l'invention, l'évent est dimensionné pour ne pas laisser s'échapper de l'air en cas de choc ou d'effort rapide sur la cellule tout en permettant un échappement et une entrée d'air lors de variation de pression interne dans la cellule sous l'effet de thermiques, ce qui conduit à un diamètre de l'évent d'environ 0.5mm.

L'invention a également pour objet un procédé de fabrication d'un panneau de protection ayant les caractéristiques de la revendication 8.

Dans une variante préférée, le moulage des deux parois est obtenu par injection d'une première matière plastique pour former l'une des parois, puis application par surmoulage par injection la deuxième matière plastique la température de masse de la deuxième matière plastique ainsi que la pression de surmoulage assurant la liaison entre les deux matières plastiques, et ladite paroi souple étant moulée de manière à présenter une surface bombée, puis refroidissement et démoulage du panneau ainsi formé.

Dans une variante, on injecte la première matière dans un moule dans un moule rotatif que l'on amène à une deuxième position pour y appliquer par surmoulage par injection la deuxième matière plastique.

Dans une autre variante, on moule par injection la première matière plastique pour former une paroi qui est ensuite déposée dans un moule classique pour y appliquer par surmoulage par injection la deuxième matière plastique.

Avantageusement, l'évent est ménagé en créant une discontinuité ponctuelle du cordon de soudure créant une rupture ponctuelle de l'étanchéité.

Selon un autre aspect, l'invention concerne également un véhicule automobile comportant au moins un panneau de protection selon l'invention fixé sur une partie de sa carrosserie qui est exposée à des chocs.

Selon une variante, ledit panneau de protection est fixé sur une partie de la carrosserie qui comporte au moins un ajour. Cet ajour permet d'alléger la partie de la carrosserie sur laquelle le panneau de protection est fixé.

Selon une autre variante de l'invention, lorsque le panneau souple ainsi constitué est mis en place sur une tôle de porte, les zones bombées de la paroi souple se retrouvent en regard de la tôle emprisonnant une couche d'air entre ladite paroi souple et la tôle.

Dans une version préférée de l'invention, ledit panneau de protection est fixé sur chacune des portes latérales du véhicule.

Ce panneau de protection peut également être fixé sur l'avant et/ou l'arrière du véhicule.

On décrira maintenant l'invention plus en détail en référence aux dessins dans lesquels :
- La figure 1 une vue en coupe d'un panneau au niveau d'une cellule ;
- Les figures 2a et 2b représentent respectivement une vue de la face interne et de la face externe de la paroi souple d'un panneau selon l'invention ;
- La figure 3 représente une vue avant de la paroi rigide d'un panneau selon l'invention ;
- La figure 4 représente une vue en coupe d'un panneau fabriqué selon le procédé de l'invention au niveau d'une cellule ;
- la figure 5 représente schématiquement, vue de face, une cellule d'un panneau selon l'invention ;
- la figure 6 est une vue en coupe selon l'axe A-A de la figure 5.

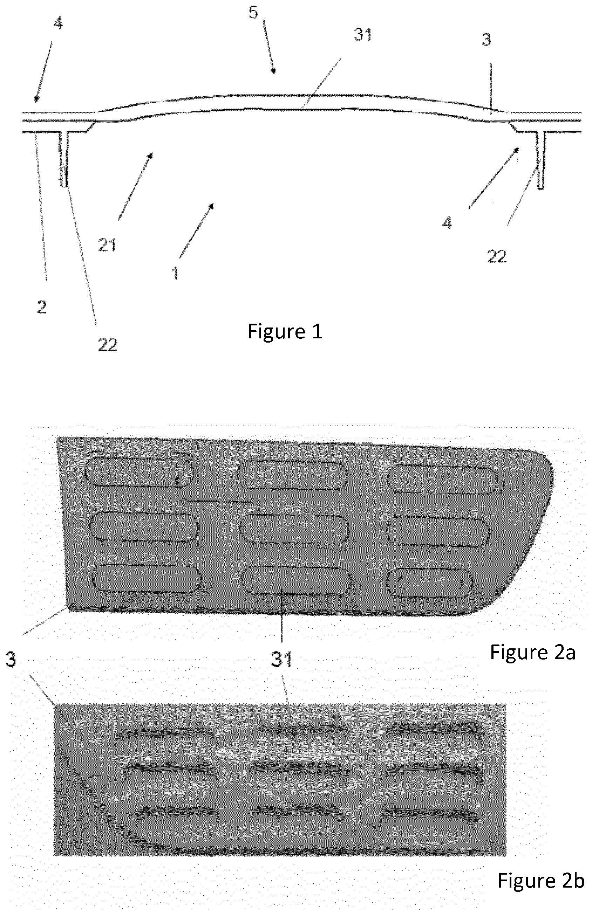

Dans la variante illustrée figure 1, un panneau 1 selon l'invention comporte une paroi en matière plastique rigide 2 et une paroi en matière plastique souple 3.

Ces deux parois 2, 3 sont en contact l'une avec l'autre dans des zones 4 qui entourent des zones 5 dans lesquelles la paroi souple 3 est bombée 31 en saillie vers l'extérieur du panneau 1 en regard d'un orifice 21 ménagé dans la paroi en matière rigide 2.

Comme cette paroi rigide 2 présente des orifices 21, on ménage sur la face interne de cette paroi, un réseau de nervures de rigidification 22.

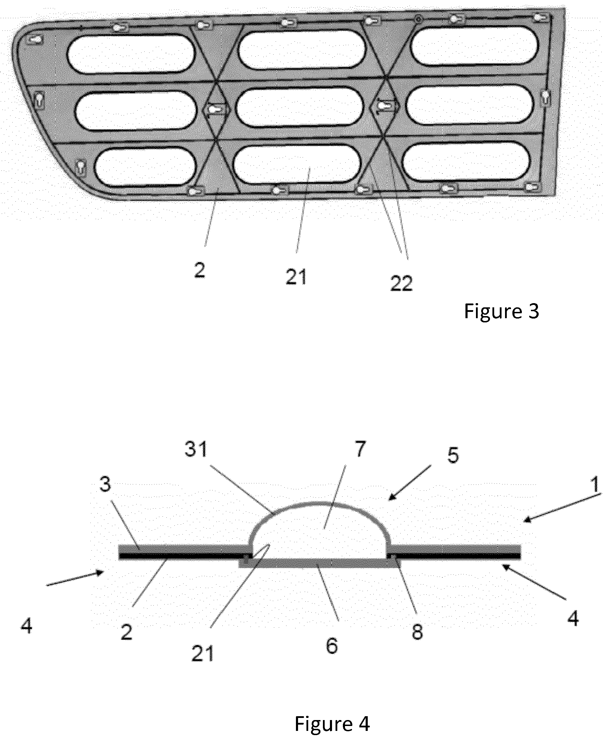

Comme illustré figure 4, pour former une cellule 7, on ferme l'orifice 21 avec un bouchon 6 rapporté sur la paroi rigide 2 avec une liaison étanche. Cette liaison étanche 8 s'étend à la périphérie de l'orifice 21 et peut être réalisée par collage, soudage tel qu'un soudage laser, un soudage ultrasons.

La paroi 3 est obtenue de préférence par moulage par injection d'une matière plastique souple dans un moule rotatif, cette matière pouvant être un polyuréthane thermoplastique (TPU). Cette première matière plastique est destinée à former la paroi souple du panneau et est pourvue de zones bombées 31.

Si cette première paroi souple 3 du panneau 1 est réalisée dans un moule rotatif, on amène ce moule à une deuxième position pour le surmoulage de la matière plastique rigide telle que de l'acrylonitrile butadiène styrène (ABS) chimiquement compatible avec le TPU de la paroi souple.

Lors de la deuxième injection de la matière plastique rigide, celle-ci surmoule la paroi souple sauf dans les zones de la paroi souple 3 pourvues des zones bombées 31 de telle sorte que des orifices 21 se trouvent ainsi ménagés dans la paroi rigide 2 en regard des zones bombées 31, un réseau de nervures de rigidification étant ménagé.

De préférence, le moule dans lequel est injecté la matière plastique rigide est un moule rotatif ave un surgalbe de telle sorte que la paroi souple en TPU est autorisée à se rétracter en refroidissant. Après refroidissement, le panneau réalisé aura le galbe théorique.

Une fois le surmoulage effectué, chaque cellule ouverte ainsi constituée est fermée à l'aide d'un bouchon 6 en une matière plastique identique à celle de la paroi rigide ce qui permet de la fixer de manière étanche sur la paroi rigide 2.

Dans les zones de la paroi en matière plastique souple, dans lesquelles se trouve une surface convexe dirigée vers l'extérieur, celle-ci est soit sous forme de bulle de section circulaire comme dans la figure 4 soit sous forme d'une bulle allongée ou toute autre forme appropriée telle qu'une alvéole.

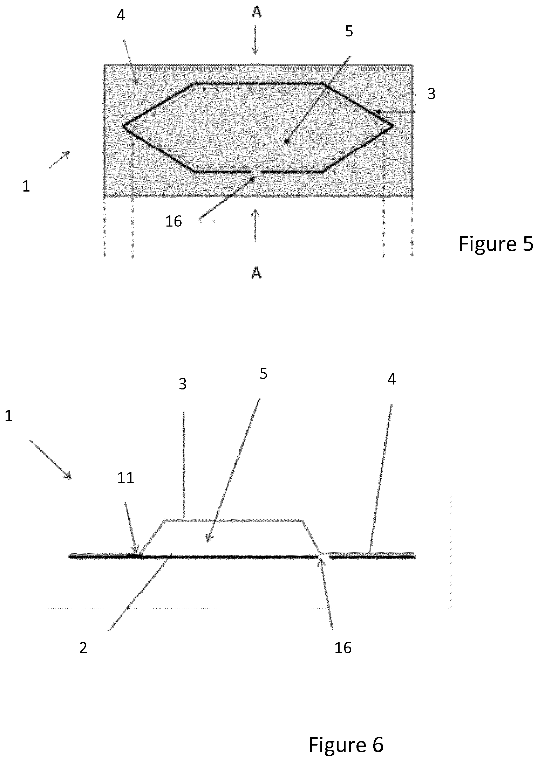

Les figures 5 et 6 illustrent plus spécialement le rôle de l'évent et son obtention.

A la figure 5, on a représenté à nouveau un panneau de protection 1 selon l'invention comprend une paroi intérieure 2 en matière plastique rigide destinée à venir contre la tôle d'une pièce de carrosserie de véhicule et une paroi extérieure 3 en matière plastique souple destinée à être tournée vers l'extérieur du véhicule.

Ces deux parois 2, 3 sont en contact l'une avec l'autre dans des zones 4 qui entourent des zones 5 dans lesquelles ces deux parois 2, 3 sont espacées l'une de l'autre, lesdites zones 5 étant remplies d'air. Pour former cet espace, la paroi extérieure souple 3 présente une forme bombée convexe, en saillie vers l'extérieur du panneau 1.

Les zones 5 sont délimitées par une liaison étanche 11 des parois 2 et 3 qui sont en contact l'une avec l'autre et définissent ainsi des cellules 5 capables d'amortir de petits chocs urbains. Dans les zones dans lesquelles les deux parois 2, 3 sont donc en contact l'une avec l'autre, ces deux parois 2, 3 sont soudées ou collées l'une à l'autre, au moins par la liaison étanche 11 délimitant la zone 5.

La matière plastique constituant la paroi souple du panneau est choisie de manière à présenter des caractéristiques suffisantes de résistance à la rayure et aux UVs, de nettoyabilité ainsi que de résistance mécanique appropriée dans une plage de températures d'utilisation de -30°C à + 85°C.

La matière plastique constituant la paroi rigide du panneau doit présenter des caractéristiques appropriées de résistance aux chocs y compris à basse température, de résistance mécanique en température à 85°C (module de Young, résistance à la traction). En outre, elle doit présenter un faible coefficient de dilatation afin de garantir les jeux et affleurements ainsi qu'une bonne injectabilité pour sa fabrication.

Ainsi, la paroi 2 en matière plastique rigide peut être en ABS (acrylonitrile, butadiène styrène), PC (polycarbonate), PP (polypropylène) ou analogues. De préférence, on utilise un alliage de PC/ABS avec un pourcentage de PC de l'ordre de 65%, notamment dans le cas d'un assemblage des parois par soudage laser.

La paroi 3 en matière plastique souple peut être en élastomère, tel qu'en polyuréthanes thermoplastiques (TPU) aromatiques ou aliphatiques, en silicone (SIK), en polychlorure... (PVC) ou en élastomères thermoplastiques oléfiniques ou styréniques. Les matières plastiques rigide et souple sont choisies de manière à être compatibles en termes de soudage ou de collage.

A la figure4, la cellule 5 présente une forme hexagonale formant ainsi une alvéole. Cette forme en alvéole 5 permet une répartition des cellules 5 en nid d'abeille dans le panneau 1 et présente ainsi l'avantage de minimiser la surface des zones de liaison 4 entre les cellules 5. Ainsi, l'essentiel de la surface extérieure du panneau 1 est constituée par des alvéoles 5 capables d'amortir des petits chocs urbains sans endommager ni le panneau 1, ni la porte sur laquelle le panneau est fixé.

Pour qu'une cellule ou alvéole 5 présente une souplesse / dureté adéquate, on peut jouer sur les caractéristiques suivantes :
- dureté et épaisseur de la matière souple constituant la paroi 3
- forme plus ou moins bombée de la cellule 5
- dépassement en Y du sommet de la cellule 5 par rapport à la zone 4 rigide
- largeur de la cellule 5.

Dans ce dernier cas ce qui compte c'est la plus petite dimension de l'alvéole 5. Que la longueur de l'alvéole soit égale ou supérieure à la largeur ne joue pas.

Dans le cas d'une cellule se présentant sous la forme d'une bulle de section circulaire étanche, la compression de l'air doit être prise en compte, en plus des caractéristiques de matériau et de géométrie de la cellule. Dans ce cas, pour être efficace, il faut que la cellule ait une forme aussi arrondie que possible (forme de ballon). Une bulle ovale assez plate se caractérise par peu d'élévation de pression en cas de déformation.

Dans l'exemple montré sur les figures 4 et 5, chaque alvéole 5 comporte un fuite d'air ou évent 16 ménagé au niveau de la liaison étanche 11 définissant la cellule par une interruption ponctuelle du soudage, cette interruption ou « trou dans le cordon de soudure » créant la discontinuité du cordon et donc une rupture ponctuelle de l'étanchéité.

En variante, il est également possible de réaliser une soudure périphérique continue étanche, puis de percer ensuite ce trou de petit diamètre en reprise. Ce trou peut être localisé de manière préférentielle en zone basse de la cellule, dans le support rigide.

Le perçage permettant de générer l'évent 16 peut être fait de différentes manières. Ainsi, il peut être réalisé par perçage classique avec enlèvement de copeaux. Cet enlèvement de matière peut être réalisé de préférence dans une zone volontairement plus fine réalisée par injection.

On peut également réaliser cet évent 6 par un perçage par rayon laser, un poinçonnage à l'aide d'un pointeau conique et toute autre technique qui serait appropriée.

L'évent 6 est dimensionné pour ne pas laisser s'échapper de l'air en cas de choc ou d'effort rapide sur la cellule 5 tout en permettant un échappement et une entrée d'air lors de variation de pression interne dans la cellule 5 sous l'effet de variations thermiques.

Ainsi, l'évent 16 permet de réguler la montée en pression de l'air au sein de la cellule 5 sous l'effet d'une augmentation de la température, lorsque le véhicule reste au soleil et lors d'une baisse notamment liée au froid.

Lors d'une élévation de température, une surpression survient au sein de cette cellule 5 et entraîne un très fort risque de rupture de l'étanchéité de la liaison 11 entre les parois rigide 2 et souple 3. La présence de l'évent ou fuite d'air 16 permet à l'air de s'échapper pour maintenir une pression adaptée dans la cellule 5.

Lors de la baisse de température, on évite également une dépression dans la cellule 5 pouvant conduire à une déformation de cette cellule 5. La dépression pouvant intervenir au sein de la cellule 5 est alors compensée par l'entrée d'air par l'évent 16.

Le panneau de protection selon l'invention peut ainsi être fixé sur un élément de carrosserie d'un véhicule automobile mais pourrait être utilisé également en tant que panneau de protection fixé sur des surfaces à protéger exposées à des chocs d'autres types de véhicules ainsi que sur des embarcations nautiques telles que bateau, barques, canots, etc.

## Revendications

1. Panneau de protection (1) en matière plastique destiné à être fixé sur une partie de la carrosserie d'un véhicule automobile, ce panneau comportant une paroi en matière plastique rigide (2) et une paroi en matière plastique souple (3), ces deux parois (2, 3) étant en contact l'une avec l'autre dans des zones qui entourent des zones dans lesquelles la paroi souple (3) est bombée en saillie vers l'extérieur du panneau et la paroi en matière plastique rigide (2) comportant sur l'une de ses faces des moyens de fixation pour fixer celle-ci à ladite partie de la carrosserie, chaque zone (5) dans laquelle les parois (2, 3) sont espacées définissant une cellule remplie d'air délimitée par une liaison étanche (11) entre la paroi souple (3) et la paroi rigide (2), et en ce chaque zone (5) dans laquelle les parois (2, 3) sont espacées est en relation avec l'extérieur du panneau (1) par un évent (16), dimensionné pour ne pas laisser s'échapper de l'air en cas de choc ou d'effort rapide sur la cellule (5) tout en permettant un échappement et une entrée d'air lors de variation de pression interne dans la cellule (5) sous l'effet de variations thermiques, **caractérisé en ce que** l'évent est d'environ 0,5 mm de diamètre.

2. Panneau (1) selon la revendication 1, **caractérisé en ce que** les zones dans lesquelles les deux parois (2, 3) sont en contact l'une avec l'autre occupent moins de 50% de la surface du panneau.

3. Panneau de protection (1) selon l'une quelconque des revendications précédentes, **caractérisé en ce que** la liaison étanche (11) est réalisée par soudage laser de manière à présenter une résistance mécanique supérieure à la contrainte mécanique provoquée par l'augmentation de la pression dans la cellule (5) lors d'un impact.

4. Panneau selon la revendication selon l'une quelconque des revendications précédentes, **caractérisé en ce que** la paroi en matière plastique rigide est constituée par une plaque munie d'orifices (21), en regard des zones dans lesquelles la paroi souple est bombée et par des bouchons (8) placés dans les orifices (21).

5. Panneau selon la revendication 4 **caractérisé en ce que** l'évent est disposé sur le bouchon (8).

6. Panneau selon l'une quelconque des revendications 1 à 4, **caractérisé en ce que** l'évent (16) est réalisé par une rupture ponctuelle de l'étanchéité de la liaison (11) obtenue par une discontinuité du cordon de soudure entre la paroi rigide (2) et la paroi souple (3).

7. Panneau selon la revendication 6, **caractérisé en ce que** la discontinuité du cordon de soudure est obtenue par une interruption ponctuelle du cordon de soudure ou par un perçage au niveau du cordon de soudure réalisé.

8. Procédé de fabrication d'un panneau de protection en matière plastique destiné à être fixé sur une partie de la carrosserie d'un véhicule automobile, comprenant une paroi en matière plastique rigide et une paroi en matière plastique souple, ces deux parois étant en contact l'une avec l'autre dans des zones qui entourent des zones remplies d'dans lesquelles ces deux parois sont espacées l'une de l'autre, procédé comprenant les étapes consistant : à réaliser par moulage les deux parois, l'une en une première matière plastique pour former la paroi rigide et l'autre en une deuxième matière plastique pour former la paroi souple, puis à appliquer la paroi souple contre la paroi rigide de sorte que ces deux parois soient en contact l'une avec l'autre dans les zones entourant des zones dans lesquelles elles sont espacées, lesdites zones définissant une cellule remplie d'air et en ménageant un évent pour mettre contact entre l'extérieur du panneau et les zones dans lesquelles les deux parois sont espacées l'une de l'autre, l'évent étant dimensionné pour ne pas laisser s'échapper de l'air en cas de choc ou d'effort rapide sur la cellule tout en permettant un échappement et une entrée d'air lors de variation de pression interne dans la cellule sous l'effet de variations thermiques, procédé **caractérisé en ce que** l'évent est d'environ 0,5 mm de diamètre.

9. Procédé de fabrication selon la revendication 8, **caractérisé en ce que** le moulage des deux parois est obtenu par injection d'une première matière plastique pour former l'une des parois, puis application par surmoulage par injection la deuxième matière plastique la température de masse de la deuxième matière plastique ainsi que la pression de surmoulage assurant la liaison entre les deux matières plastiques, et ladite paroi souple (3) étant moulée de manière à présenter une surface bombée(31), puis refroidissement et démoulage du panneau ainsi formé.

10. Procédé de fabrication selon la revendication 8 ou la revendication 9, caractérisé en que l'évent est ménagé en créant une discontinuité ponctuelle du cordon de soudure créant une rupture ponctuelle de l'étanchéité.

11. Procédé selon l'une des revendications 8 à 10, **caractérisé en ce qu'**on injecte la première matière dans un moule dans un moule rotatif que l'on amène à une deuxième position pour y appliquer par surmoulage par injection la deuxième matière plastique

12. Procédé selon la revendication 8 à 10, **caractérisé en ce qu'**on moule par injection la première matière plastique pour former une paroi qui est ensuite déposée dans un moule classique pour y appliquer par surmoulage par injection la deuxième matière plastique.

13. Véhicule automobile comportant au moins un panneau de protection selon l'une des revendications 1 à 7, fixé sur une partie de sa carrosserie qui est exposée à des chocs.

## Patentansprüche

1. Schutzpaneel (1) aus Kunststoff, das dazu bestimmt ist, auf einem Teil der Karosserie eines Kraftfahrzeugs befestigt zu sein, wobei dieses Paneel eine Wand (2) aus starrem Kunststoff und eine Wand (3) aus biegsamen Kunststoff umfasst, wobei diese zwei Wände (2, 3) miteinander in Zonen in Berührung sind, die Zonen umgeben, in welchen die biegsame Wand (3) nach außerhalb des Paneels vorstehend gewölbt ist, und die Wand (2) aus starrem Kunststoff auf einer ihrer Seiten Befestigungsmittel umfasst, um sie an dem Teil der Karosserie zu befestigen, wobei jede Zone (5), in der die Wände (2, 3) beabstandet sind, eine Zelle definiert, die mit Luft gefüllt ist, die durch eine dichte Verbindung (11) zwischen der biegsamen Wand (3) und der starren Wand (2) abgegrenzt ist, und dass jede Zone (5), in der die Wände (2, 3) beabstandet sind, mit dem Äußeren des Paneels (1) durch eine Lüftung (16) verbunden ist, die bemessen ist, um bei einem Stoß oder schneller Kraft auf der Zelle (5) keine Luft austreten zu lassen und gleichzeitig ein Austreten und ein Eintreten von Luft bei interner Druckvariation in der Zelle (5) unter der Einwirkung von Wärmevariationen zu erlauben, **dadurch gekennzeichnet, dass** die Lüftung etwa 0,5 mm Durchmesser hat.

2. Paneel (1) nach Anspruch 1, **dadurch gekennzeichnet, dass** die Zonen, in welchen die zwei Wände (2, 3) miteinander in Berührung sind, mindestens 50 % der Oberfläche des Paneels belegen.

3. Schutzpaneel (1) nach einem der vorhergehenden Ansprüche, **dadurch gekennzeichnet, dass** die dichte Verbindung (11) durch Laserschweißen derart ausgeführt wird, dass sie eine mechanische Festigkeit aufweist, die höher ist als die mechanische Belastung, die durch die Erhöhung des Drucks in der Zelle (5) bei einem Aufprall verursacht wird.

4. Paneel nach einem der vorhergehenden Ansprüche, **dadurch gekennzeichnet, dass** die Wand aus starrem Kunststoff aus einer Platte besteht, die mit Öffnungen (21) gegenüber Zonen, in welchen die biegsame Wand gewölbt ist, und Stopfen (8), die in die Öffnungen (21) platziert sind, versehen ist.

5. Paneel nach Anspruch 4, **dadurch gekennzeichnet, dass** die Lüftung auf dem Stopfen (8) angeordnet ist.

6. Paneel nach einem der Ansprüche 1 bis 4, **dadurch gekennzeichnet, dass** die Lüftung (16) durch einen stellenweisen Bruch der Abdichtung der Verbindung (11) hergestellt ist, der durch eine Unterbrechung der Schweißnaht zwischen der starren Wand (2) und der biegsamen Wand (3) erhalten wird.

7. Paneel nach Anspruch 6, **dadurch gekennzeichnet, dass** die Unterbrechung der Schweißnaht durch eine stellenweise Unterbrechung der Schweißnaht oder durch ein Bohren im Bereich der ausgeführten Schweißnaht erhalten wird.

8. Verfahren zur Herstellung eines Schutzpaneels aus Kunststoff, das dazu bestimmt ist, auf einem Teil der Karosserie eines Kraftfahrzeugs befestigt zu sein, das eine Wand aus starrem Kunststoff und eine Wand aus biegsamen Kunststoff umfasst, wobei diese zwei Wände miteinander in Zonen in Berührung sind, die gefüllte Zonen umgeben, in welchen diese zwei Wände voneinander beabstandet sind, wobei das Verfahren die Schritte aufweist, die aus Folgendem bestehen: Herstellen durch Formen der zwei Wände, eine aus einem ersten Kunststoff, um die starre Wand zu bilden, und die andere aus einem zweiten Kunststoff, um die biegsame Wand zu bilden, dann Anlegen der biegsamen Wand gegen die starre Wand derart, dass diese zwei Wände miteinander in den Bereichen, die Zonen umgeben, in welchen sie beabstandet sind, in Berührung sind, wobei die Zonen eine Zelle definieren, die mit Luft gefüllt ist, und indem eine Lüftung ausgespart wird, um Kontakt zwischen dem Äußeren des Paneels und den Zonen zu erlauben, in welchen die zwei Wände voneinander beabstandet sind, wobei die Lüftung bemessen ist, um Luft in dem Fall eines Stoßes oder einer schnellen Kraft auf der Zelle nicht austreten zu lassen, während ein Austreten und ein Eintreten von Luft während interner Druckvariation in der Zelle unter der Einwirkung von Wärmevariationen erlaubt wird, Verfahren **dadurch gekennzeichnet, dass** die Lüftung etwa 0,5 mm Durchmesser hat.

9. Herstellungsverfahren nach Anspruch 8, **dadurch gekennzeichnet, dass** das Formen der zwei Wände durch Einspritzen eines ersten Kunststoffs zum Bilden einer der Wände, dann Anlegen durch Überformen durch Einspritzen des zweiten Kunststoffs erfolgt, wobei die Massentemperatur des zweiten Kunststoffs und der Überformdruck die Verbindung zwischen den zwei Kunststoffen sicherstellen, und wobei die biegsame Wand (3) derart geformt ist, dass sie eine gewölbte Oberfläche (31) aufweist, dann Abkühlen und Abformen des derart gebildeten Paneels.

10. Herstellungsverfahren nach Anspruch 8 oder 9, **dadurch gekennzeichnet, dass** die Lüftung ausgespart wird, indem eine stellenweise Unterbrechung der Schweißnaht geschaffen wird, die eine stellenweise Unterbrechung der Abdichtung schafft.

11. Verfahren nach einem der Ansprüche 8 bis 10, **dadurch gekennzeichnet, dass** man den ersten Kunststoff in eine Form in einer Drehform einspritzt, die man zu einer zweiten Position führt, um dort durch Überformen durch Einspritzen den zweiten Kunststoff aufzubringen.

12. Verfahren nach einem der Ansprüche 8 bis 10, **dadurch gekennzeichnet, dass** man durch Einspritzen den ersten Kunststoff formt, um eine Wand zu bilden, die anschließend in einer herkömmlichen Form abgelegt wird, um dort durch Überformen durch Einspritzen den zweiten Kunststoff aufzubringen.

13. Kraftfahrzeug, das mindestens ein Schutzpaneel nach einem der Ansprüche 1 bis 7, das auf einem Teil seiner Karosserie, der Stößen ausgesetzt ist, befestigt ist, umfasst.

## Claims

1. A protective panel (1) made of plastic material, intended to be attached onto a portion of the body of a motor vehicle, this panel comprising a wall (2) made of rigid plastic material and a wall made of flexible plastic material (3), these two walls (2, 3) being in contact with one another in zones which surround zones in which the flexible wall (3) bulges so as to project toward the exterior of the panel, and the wall made of rigid plastic material (2) comprising on one of its faces attachment means to attach the latter to said portion of the body, each zone (5) in which the walls (2, 3) are spaced apart defining a cell filled with air delimited by a sealed connection (11) between the flexible wall (3) and the rigid wall (2), and in that each zone (5) in which the walls (2, 3) are spaced apart is in communication with the exterior of the panel (1) through a vent (16), dimensioned so as to not allow air to escape in the case of impact or rapid force on the cell (5), whilst permitting an escape and an entry of air during variation of internal pressure in the cell (5) under the effect of thermal variations, **characterized in that** the vent is approximately 0.5 mm in diameter.

2. The panel (1) according to claim 1, **characterized in that** the zones in which the two walls (2, 3) are in contact with one another occupy less than 50 % of the area of the panel.

3. The protective panel (1) according to any one of the preceding claims, **characterized in that** the sealed connection (11) is realized by laser welding so as to present a mechanical resistance greater than the mechanical stress caused by the increase of the pressure in the cell (5) during an impact.

4. The panel according to the claim according to any one of the preceding claims, **characterized in that** the wall made of rigid plastic material is constituted by a sheet provided with orifices (21), opposite zones in which the flexible wall bulges and by plugs (8) placed in the orifices (21).

5. The panel according to claim 4, **characterized in that** the vent is disposed on the plug (8).

6. The panel according to any one of claims 1 to 4, **characterized in that** the vent (16) is realized by an individual break of the seal of the connection (11) obtained by a discontinuity of the weld seam between the rigid wall (2) and the flexible wall (3).

7. The panel according to claim 6, **characterized in that** the discontinuity of the weld seam is obtained by an individual interruption of the weld seam or by a bore at the level of the created weld seam.

8. A method for manufacturing a protective panel made of plastic material intended to be attached to a portion of the body of a motor vehicle, including a wall made of rigid plastic material and a wall made of flexible plastic material, these two walls being in contact with one another in zones which surround zones filled with [ ] in which these two walls are spaced apart from one another, the method including the steps consisting of: realizing the two walls by moulding, one made of a first plastic material to form the rigid wall and the other made of a second plastic material to form the flexible wall, then of applying the flexible wall against the rigid wall so that these two walls are in contact with one another in the zones surrounding zones in which they are spaced apart, said zones defining a cell filled with air and by arranging a vent to place in contact between the exterior of the panel and the zones in which the two walls are spaced apart from one another, the vent being dimensioned so as to not allow air to escape in the case of impact or rapid force on the cell, whilst permitting an escape and an entry of air during variation of internal pressure in the cell under the effect of thermal variations, the method **characterized in that** the vent is approximately 0.5 mm in diameter.

9. The method for manufacturing according to claim 8, **characterized in that** the moulding of the two walls is obtained by injection of a first plastic material to form one of the walls, then application by overmoulding by injection the second plastic material, the mass temperature of the second plastic material and the overmoulding pressure ensuring the connection between the two plastic materials, and said flexible wall (3) being moulded so as to present a bulged area (31), then cooling and demoulding of the panel thus formed.

10. The method for manufacturing according to claim 8 or 9, **characterized in that** the vent is arranged by creating an individual discontinuity of the weld seam creating an individual break of the seal.

11. The method according to one of claims 8 to 10, **characterized in that** the first material is injected in a mould in a rotary mould when is brought to a second position to apply the second plastic material to it by overmoulding by injection.

12. The method according to one of claims 8 to 10, **characterized in that** the first plastic material is moulded by injection to form a wall which is then deposited in a conventional mould to apply to it the second plastic material by overmoulding by injection.

13. A motor vehicle comprising at least one protective panel according to one of claims 1 to 7, attached to a portion of its body which is exposed to impacts.
